# EUROPEAN PATENT SPECIFICATION

(11) **EP 2 428 794 B1**
(45) Date of publication and mention of the grant of the patent: **01.04.2015**
(21) Application number: 11180413.4
(22) Date of filing: 07.09.2011
(51) Int. Cl.: G01N 21/952

(54) **An inspection device for mechanical elements and the like**
Inspektionsvorrichtung für mechanische Elemente und ähnliche.
Dispositif d'inspection d'éléments mécaniques et similaires.

(30) Priority: 08.09.2010 IT MI20101629
(43) Date of publication of application: 14.03.2012
(73) Proprietor: Regg Inspection S.r.L., 20064 Gorgonzola (MI) (IT)
(72) Inventor: D'Ambrosio, Riccardo, 20064 GORGONZOLA (Milan) (IT); Trionfetti, Gianni, 20064 GORGONZOLA (Milan) (IT); Vatalaro, Sandro, 20064 GORGONZOLA (Milan) (IT)
(74) Representative: Lunati & Mazzoni S.r.L.

(56) References cited:
- WO-A1-2007/131257
- DE-A1- 10 140 374
- US-A- 4 315 688
- US-A- 4 644 394
- US-A1- 2005 134 838
- US-A1- 2005 155 915
- US-A1- 2006 244 953
- US-A1- 2008 192 243
- US-A1- 2008 253 643
- US-A1- 2009 015 823

## Description

The present invention relates to an inspection device for mechanical elements and the like, of the type pointed out in the preamble of the first claim. Presently known are devices capable of usually-optically detecting the presence of defects or faults determining the quality of the outer surface of mechanical elements, screws for example. Similar devices are described in patent applications US-A-2008/192243, WO-A-2007/131257, US-A-2005/134838. The devices generally comprise a camera framing the corner of a screw in rotation around its axis, with a light surface in the background. Therefore, the image highlights the screw edge, in contrast with the light surface, and therefore the thread profile. Thus, rotation of the screw allows the whole thread to be analysed. Said inspection devices are usually disposed along the perimeter of turntables of checking apparatuses that, analysing the images detected by the device, determine conformity of the mechanical element or not. The known art mentioned above has some important drawbacks. The known devices for analysing the whole profile of the mechanical element require a system for actuating the element itself, which makes the inspection devices complicated and expensive. Another problem connected with use of such a device resides in the big sizes of the device itself giving rise to restrictions in the number of devices that can be placed on the checking apparatus. A further problem of these devices is connected with slowness of the analysis process. Under this situation, the technical task underlying the present invention is to conceive an inspection device for mechanical elements and the like capable of substantially obviating the mentioned drawbacks.

Within the scope of this technical task it is an important aim of the invention to conceive an inspection device that is simple, cheap, and of easy arrangement on a turntable.

Another objective of the present invention is to create a device capable of carrying out the analysis more quickly.

It is a further aim to conceive a device of small sizes enabling the number of devices that can be placed in a checking apparatus to be increased.

The technical task mentioned and the aims specified are achieved by an inspection device for mechanical elements and the like, as claimed in the appended independent claims.

Preferred embodiments are highlighted in the sub-claims.

The features and advantages of the invention are hereinafter clarified by the detailed description of preferred embodiments of the invention, with reference to the accompanying drawings, in which:
**Fig. 1** is an axonometric view of a first example of the inspection device according to the invention;
**Fig. 2** is a top view of the device example seen in Fig. 1;
**Fig. 3** shows the section along line III-III of the device, as seen in Fig. 2;
**Fig. 4** is a threaded element portion inspected by the device of the invention;
**Fig. 5** is a sagittal-section view of a second example of the inspection device of the invention;
**Fig. 6** is an axonometric view of a third example of the inspection device according to the invention;
**Fig. 7** shows the inspection device disposed on a checking apparatus.

With reference to the drawings, the inspection device for mechanical elements and the like according to the invention is generally identified with reference numeral **1.**

Device 1 is able to analyse mechanical elements **6** having a main extension axis **6a** and in particular to detect possible irregularities present on at least part of the side surface **6b** of the mechanical elements.

Device 1 is preferably adapted to analyse mechanical elements 6 either in the form of a solid of revolution such as cylinders, cones and connecting means in general, or in the form of prismatic elements and the like. A preferred and optimal application of device 1 is the analysis of side surfaces 6b including screw threads and the like.

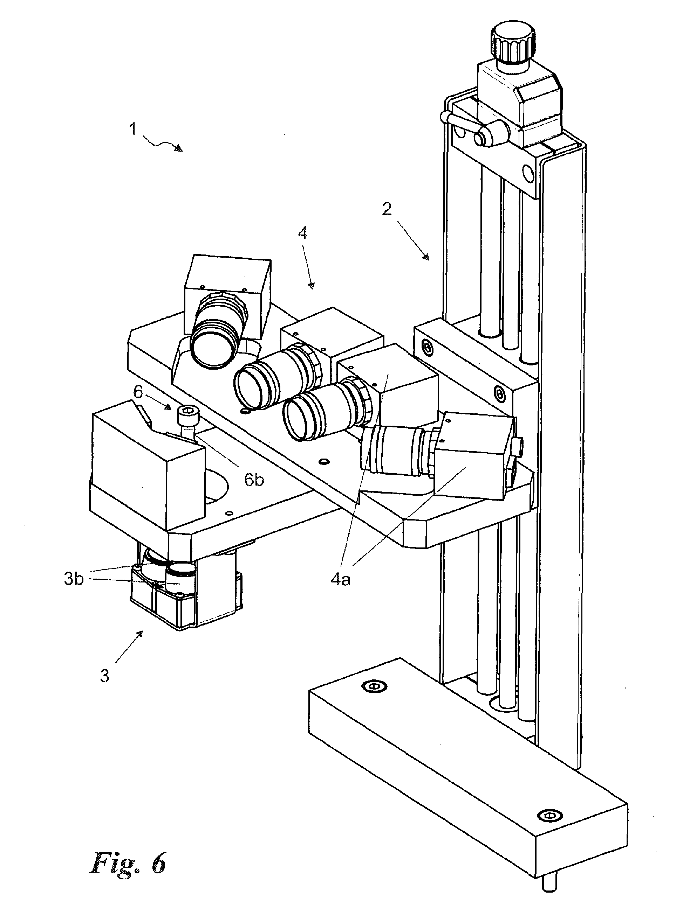

Device 1 is adapted to be mounted on apparatuses **8** for checking mechanical elements 6, as shown in Fig. 6. More specifically said device 1 is connected to and extends along the outer periphery of a turntable **7** in which housings are formed for the mechanical elements 6. In particular, said elements 6 are such disposed as to have their axes 6a preferably perpendicular to the lying plane **7a** of the turntable.

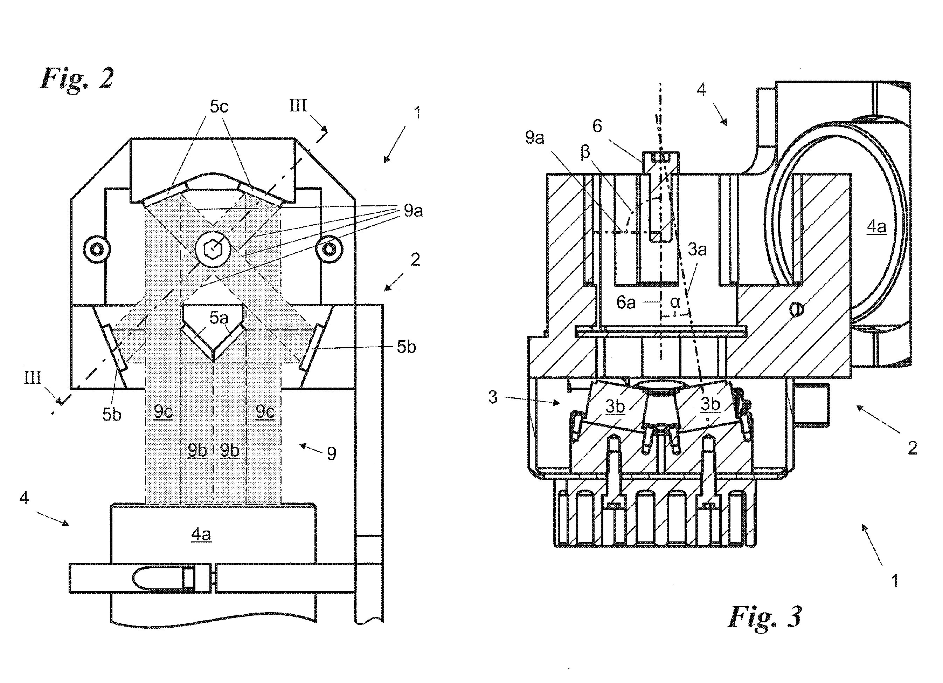

Device 1 as shown in Fig. 3 comprises lighting means **3,** at least one optical unit **4** adapted to take the image of the part of the mechanical element 6 to be analysed, and a supporting structure **2** adapted to support the lighting means 3 and optical unit 4.

Structure 2 further allows positioning of the lighting means 3 of the optical unit to be adjusted relative to the lying plane 7a during mounting of same onto the turntable 7.

The lighting means 3 comprises at least one element capable of illuminating element 6 in a lighting direction **3a.** Said means further illuminates the side surface 6b in a grazing manner, i.e. in a lighting direction 3a inclined to axis 6a. The lighting means 3 preferably comprises a plurality of spotlights **3b,** preferably of the LED type, and disposed in such a manner as to uniformly illuminate the part of the side surface 6b to be analysed. Therefore, four spotlights 3b are preferably present for obtaining a uniform lighting of surface 6b. In addition, they are preferably located under the lying plane 7a.

They are disposed in such a manner as to illuminate the side surface 6b of element 6 in a lighting direction 3a inclined to axis 6a by a lighting angle α included between 5° and 15° and in particular of about 10°.

Selection of this specific lighting angle α enables grazing lighting of surface 6b to be obtained. This lighting, in opposition to front lighting or lighting with values greater than the aforesaid angle α, allows possible surface unevennesses such as faults in the thread, cracks or fissures, to create discontinuities in the lighted portion of the side surface 6b. Said discontinuities are in fact of easy and quick examination through the optical unit 4.

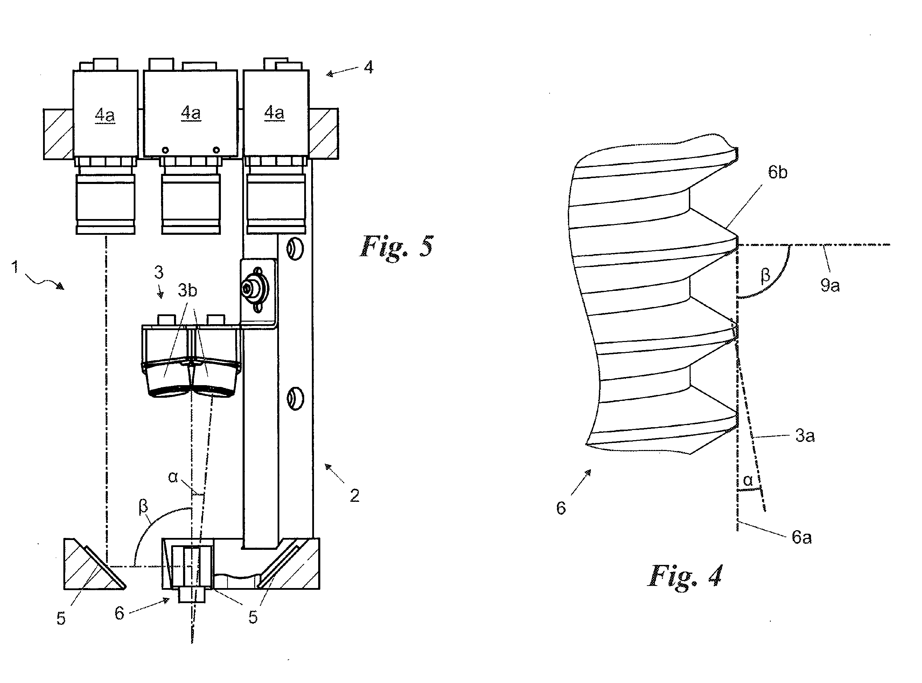

In case of inspection of a thread, the grazing lighting causes the thread crest to be lighted, while the groove is in the shade, as shown in Fig. 4. This difference in lightness between groove and crest enables the thread edge to be highlighted thus facilitating identification of irregularities.

The optical unit 4 is adapted to take the image of the whole of the side surface 6b and defines a plurality of shooting beams **9** each of which frontally takes the image of a portion of the side surface 6b of the element 6 to be analysed.

In detail, each shooting beam 9 takes the image of at least part of surface 6b and extends, at element 6, in at least one shooting direction **9a** that, in the vicinity of the surface to be analysed, forms a shooting angle β included between 75° and 115° with axis 6a.

It is preferred for the shooting angle β to be essentially of 90°, so as to take a front shooting of the side surface 6b.

Preferably, four shooting beams 9 disposed in angular symmetry at element 6 are present.

This shooting allows a simultaneous and front view of the entirety of the side surface 6b and accurate and quick identification of the position and sizes of the irregularities therein present.

The optical unit 4 comprises at least one video camera **4a** or even a photocamera, but in the following reference will be always made to a camera, adapted to take said shots or merely photos of surface 6b along said shooting beams, and preferably at least one mirror **5** adapted to direct the shooting beams 9.

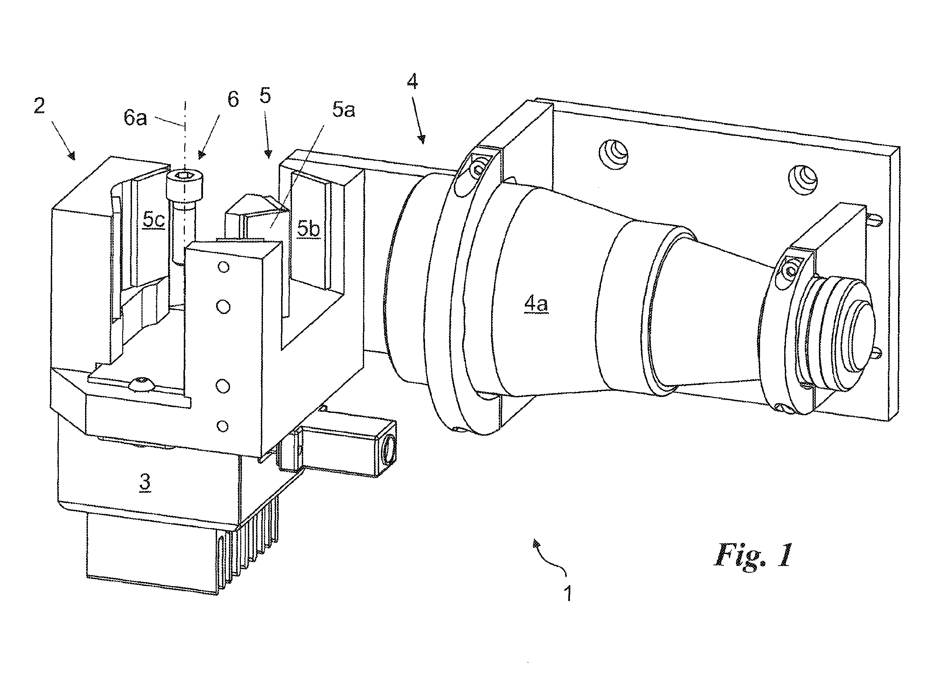

Mirrors 5 can be merely adapted to deviate the whole image taken by a camera 4a, as it happens in the examples in Figs. 5 and 6, or also to divide and deviate the image taken by a camera 4a into several shooting beams 9, as it happens in the example in Figs. 1-3.

In particular, the first configuration of the inspection device 1 for mechanical elements 6, shown in Figs. 1-3, contemplates an optical unit 4 including a single camera 4a the image of which is deviated by mirrors 5 so as to define a plurality of shooting beams 9, as described in the following.

In detail, camera 4a is substantially such disposed that the shooting direction, in the vicinity of the camera, is perpendicular to axis 6a. In addition, mirrors 5 are such disposed as to create a plurality of shooting beams 9 at element 6.

Mirrors 5 therefore define a plurality of shooting beams 9 each of which has a shooting direction 9a of its own and takes a partial image of the side surface 6b. The partial images defined by the shooting beams 9 are able to allow a full image of the side surface 6b.

Preferably, camera 4a identifies four distinct shooting beams 9: two central beams **9b** adapted to take the image of the portion of the side surface 6b close to camera 4a, and two side beams **9c** adapted to take the image of the portion of surface 6b appearing on the opposite side relative to camera 4a.

Preferably, the central shooting directions 9b are first deviated by first mirrors **5a** disposed between camera 4a and the mechanical element 6 at the central portion of camera 4a. In detail, these first mirrors 5a substantially deviate the shooting directions 9a by 90° and, more specifically, deviate the central shooting directions 9b substantially along the same direction but in opposite propagation ways.

Subsequently, the central shooting directions 9b are directionally changed by second mirrors **5b** substantially deviating each of them by 45°, directing it against the side surface 6b of the mechanical element 6.

On the contrary, each shooting direction 9a of the side shooting beams 9c laterally goes beyond the mechanical element 6 and is deviated by third mirrors **5c.** In detail, these third mirrors 5c substantially deviate each of said shooting directions 9a by 45° and direct it against the side surface 6b of the mechanical element 6.

Moreover, the above described arrangement of mirrors 5a, 5b and 5c is of such a nature that the direction 9a of the side shooting beam 9c is substantially coincident with one of the central shooting direction 9b, as shown in Fig. 3b.

In addition, in order to ensure an optimal focusing of the mechanical element 6 by camera 4a, the optical travels of the shooting beams 9 cover the same or similar distances.

A second example of inspection device 1 for mechanical elements is shown in Fig. 5 where a device 1 is reproduced which has an optical unit 4 with four cameras 4a (three cameras are illustrated, but the central one is a double camera and is also present in the section portion not illustrated), each of said cameras defining a shooting beam 9 of its own. In detail, cameras 4a are such disposed that the shooting directions 9a are offset from each other by an angle of substantially 90° so as to ensure optimal shooting of the whole profile of element 6.

In this particular example, cameras 4a are, for instance, positioned with the shooting direction in the vicinity of cameras 4a substantially parallel to axis 6a. Four mirrors 5 are then present being suitably positioned on the supporting structure 2, and they deviate the shooting direction 9a so that it is placed in a direction substantially perpendicular to axis 6a and ensures a front vision of surface 6b.

Represented in Fig. 6 is a third example of device 1.

In this example four cameras 4a are present and they are disposed on the same side as element 6, two of them directly framing a portion of surface 6b and the two others framing through two mirrors 5.

It is also possible to combine the solutions in Figs. 5 and 6 so as to obtain intermediate solutions.

Operation of the inspection device 1 for mechanical elements and the like above described as to its structure is the following.

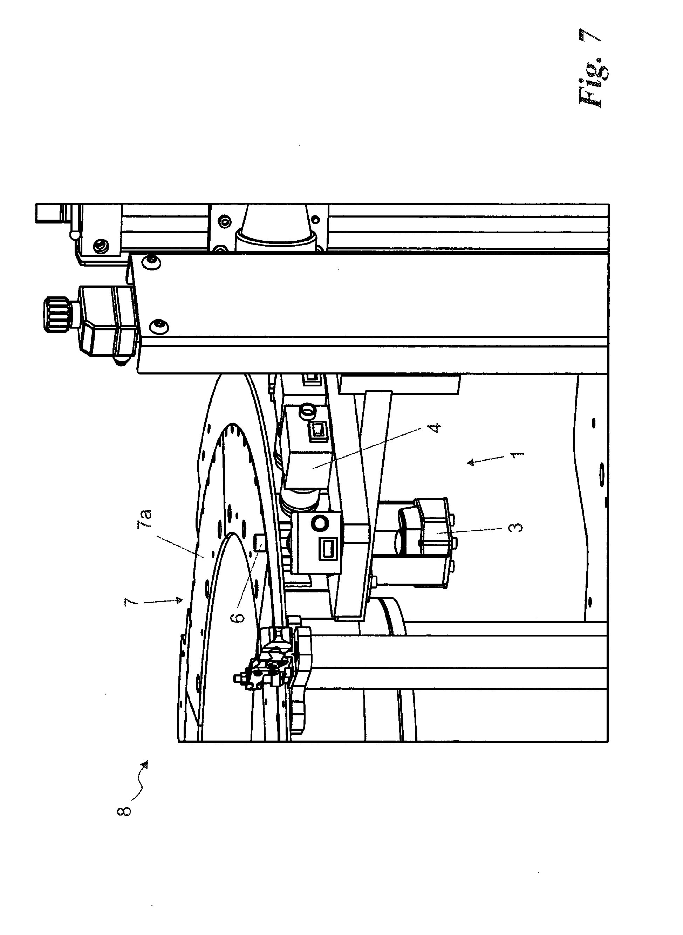

The turntable 7 rotates until it places the mechanical element 6 to a suitable position for analysis, as shown in Fig. 7, on the inspection device 1.

Element 6 is immobile while the lighting means 3 illuminates the portion of the side surface 6b to be analysed.

In particular, if surface 6b is threaded, it appears like a succession of light and dark strips, wherein the first strips represent the thread crests and the second strips the thread grooves.

The alternation of light and dark strips enables the thread edge to be identified as a line the linearity of which is proportional to the thread quality.

The optical unit 4 and, in particular, camera 4a takes the image of, or photographs the whole of the lighted surface 6b and transmits the collected data to the control apparatus 8 determining the conformity or not of element 6 and possible elimination or destination for use of same.

Each shooting beam 9a therefore takes a front and partial image of element 6 consisting of an angular sector of side surface 6b having a width of at least 90°. In detail, each central 9b and side 9c shooting beam takes the image of an angular sector of said surface 6b of a width at least equal to 180°, and more specifically, substantially equal to 180°.

In particular, due to a suitable software, the checking apparatus rebuilds the image of the side surface 6b based on data collected by the optical unit 4. This image, in the preferred example of device with only one camera 4a consists for instance of the partial images of the four side 9c and central 9b shooting beams.

During rebuilding of the whole image of the side surface 6b, the checking apparatus 8 and, in detail, the software processes the supplied partial images for rebuilding the whole image of the side surface 6b.

The software allows the apparatus to recognise possible angular sectors that are present in two or more partial images. In detail, the software overlaps said angular sectors so as to eliminate possible visual faults due to the circular form of the side surface 6b analysed, for example.

The software further and preferably automatically verifies the integrity of element 6 and in particular of surface 6b through analysis of the image.

It should be also pointed out that during the whole analysis process of the mechanical element 6, no component is in motion.

The invention comprises a new process for inspecting mechanical elements 6 and in particular screws and the like, in order to highlight faults present on the outer surface of same.

This process is suitably carried out by an inspection device 1 as previously described and starts at the moment the turntable 7 presents a mechanical element 6 to the inspection device 1.

In the process at least one portion of the side surface 6b is analysed, in particular a threaded surface, through a lighting step and a simultaneous shooting step.

In the lighting step, the light strikes on the side surface 6b in a grazing manner, in particular in a direction 3a forming a lighting angle α with axis 6a that is included included between 5° and 15°. The lighting angle α is preferably 10°.

Such a lighted portion of the side surface 6b is therefore photographed or filmed simultaneously entirely during the shooting step. This operation is carried out through front shots of circular sectors of the side surface 6b so as to take the image of the whole surface 6b.

In addition, shots are carried out with an angle β between the shooting direction 9a and axis 6a included between 75° and 115°.

In detail, during the whole process, due to the above described arrangement of the elements forming the inspection device 1, the mechanical element 6 is not moved relative to the device itself.

Preferably this shooting takes place frontally, i.e. with angle β substantially of 90°.

The invention achieves important advantages.

In fact, the inspection device 1 for mechanical elements and the like allows the side surface 6b of a mechanical element 6 to be analysed automatically and in a precise and quick manner.

This analysis is carried out by virtue of lighting means 3 illuminating the side surface 6b according to a lighting direction 3a grazing on said surface. Due to this lighting, possible irregularities will give rise to lighting discontinuities making identification of said irregularities simpler.

In addition, the front shot, and not along the corner as it happens in the known art, of the side surface 6b allows a simultaneous vision of the whole side surface 6b, without movements of same.

This absence of moving parts allows reliability and effectiveness of the device to be increased and also use of a motor or other similar actuating means to be avoided.

Another advantage is connected with the described shooting angle β. This angle β allows a non perspective vision of surface 6b so that the position and sizes of the irregularities can be determined exactly. This important advantage is particularly due to the arrangement of mirrors 5 enabling the shooting direction 9a to be advantageously deviated so as to carry out said front shooting of the mechanical element 6.

Due to the absence of motor, an inspection device 1 that is simpler and of smaller sizes can be obtained. It is therefore possible to mount a greater number of devices 1 on a checking apparatus 8.

The above described arrangement of the components of device 1 not only makes use of a motor unnecessary, but also allows the analysis of a screw thread to be carried out in a precise and quick manner. In fact, due to the possibility of illuminating and analysing the whole surface in an instantaneous manner without requiring rotation of element 6, the analysis process can be speeded up.

A further advantage is represented by use and suitable positioning of mirrors 5 allowing the optical unit 4 to be such located that bulkiness of device 1 is minimised.

Particularly advantageous appears to be the first embodiment, in which only one camera 4a is present so that a unitary data flow reaches the checking apparatus 8 that will treat said data in a quicker and simpler manner.

Another important advantage is represented by the particular software adopted by the checking apparatus 8. This software in fact enables sectors of the side surface 6b that are present in two or more images to be identified and processed again for evaluation of the mechanical element 6. In addition, due to said software, the evaluation of element 6 is quick and automatic.

All of the details can be replaced by equivalent elements and the materials, shapes and sizes can be of any nature and magnitude.

## Claims

1. An inspection device (1) for a mechanical element (6) comprising a main axis (6a) and a side surface (6b) including screw threads, said inspection device (1) being adapted to inspect at least part of said side surface (6b) and comprising a supporting structure (2) suitable to support lighting means (3) and at least one optical unit (4), said optical unit (4) comprising at least one video camera (4a) and said lighting means (3), **characterised in that** said lighting means (3) is adapted to illuminate said side surface (6b) in a grazing manner, according to lighting directions (3a) striking on said side surface (6b) and forming, with said main axis (6a), lighting angles (α) included between 5° and 15°, and **in that** said optical unit (4) is adapted to define at least one shooting beam (9) suitable to take the image of at least one portion of said side surface (6b) frontally, according to shooting directions (9a) striking on said side surface (6b) and forming, with said main axis (6a), shooting angles (β) included between 75° and 115°, and **in that** said optical unit (4) is adapted to take the entire image of said side surface (6b) frontally and simultaneously, and said lighting means (3) is adapted to simultaneously illuminate the whole of said side ace (6b).

2. The inspection device (1) as claimed in claim 1, wherein said optical unit (4) defines four shooting beams (9).

3. The inspection device (1) as claimed in one or more of the preceding claims, wherein said optical unit (4) comprises mirrors (5) adapted to direct said shooting beams (9).

4. The inspection device (1) as claimed in the preceding claim, wherein said optical unit (4) comprises only one video camera (4a) and wherein said mirrors are adapted to create said plurality of shooting beams (9).

5. The inspection device (1) as claimed in one or more of the preceding claims, wherein said optical unit (4) comprises a plurality of video cameras (4a), each adapted to define a single shooting beam (9).

6. A process for inspecting mechanical elements (9) comprising a main axis (6a) and a side surface (6b) including screw threads, said inspecting process being adapted to inspect at least part of said side surface (6b) of a mechanical element (6) and comprising a lighting step for illuminating at least part of said side surface (6b), a shooting step for taking the image of said outer surface (6b) along a shooting direction (9a) striking on said side surface (6b), **characterised in that** said lighting step illuminates said side surface (6b) in a grazing manner, according to lighting directions (3a) striking on said side surface (6b) and forming, with said main axis (6a), lighting angles (α) included between 5° and 15°, and **in that** said shooting step takes the image of at least one portion of said side surface (6b) frontally and **in that** in said shooting step is taken the entire image of said side surface (6b) frontally and simultaneously, according to shooting directions (9a) striking on said side surface (6b) and forming, with said main axis (6a), shooting angles (α) included between 75° and 115°, and in said lighting step the whole of said side surface (6b) is simultaneously illuminated.

## Patentansprüche

1. Eine Inspektionsvorrichtung (1) für ein mechanisches Element (6), die eine Hauptachse (6a) und eine Seitenfläche (6b) mit einem Schraubengewinde umfasst, wobei die genannte Inspektionsvorrichtung (1) geeignet ist, wenigstens einen Teil der genannten Seitenfläche (6b) zu inspizieren und eine Trägerstruktur (2) umfasst, die geeignet ist, die genannten Beleuchtungselemente (3) und die genannte wenigstens eine optische Gruppe (4) zu tragen, wobei die genannte optische Gruppe (4) wenigstens eine Kamera (4a) und Beleuchtungselemente (3) umfasst und **dadurch gekennzeichnet** ist, dass die genannten Beleuchtungselemente (3) geeignet sind, die genannte Seitenfläche (6b) streifend nach Beleuchtungsrichtungen (3a) zu erleuchten, die die genannte Seitenfläche (6b) schneiden und mit der genannten Hauptachse (6a) Beleuchtungswinkel (α) zwischen 5° und 15° bilden und dadurch, dass die genannte optische Gruppe (4) geeignet ist, mindestens ein Aufnahmebündel (9) zu definieren, das geeignet ist, mindestens einen Abschnitt der genannten Seitenfläche (6b) frontal nach Aufnahmerichtungen (9a) aufzunehmen, die die genannte Seitenfläche (6b) schneiden und mit der genannten Hauptachse (6a) Aufnahmewinkel (β) zwischen 75° und 115° bilden und dadurch, dass die genannte optische Gruppe (4) geeignet ist, die Gesamtheit der genannten Seitenfläche (6b) frontal und gleichzeitig aufzunehmen und die genannten Beleuchtungselemente (3) geeignet sind, gleichzeitig die Gesamtheit der genannten Außenfläche (6b) zu beleuchten.

2. Inspektionsvorrichtung (1) nach einem oder mehreren der vorangegangenen Ansprüche, bei der die genannte optische Gruppe (4) vier Aufnahmebündel (9) definiert.

3. Inspektionsvorrichtung (1) nach einem oder mehreren der vorangegangenen Ansprüche, bei der die genannte optische Gruppe (4) Spiegel (5) umfasst, die geeignet sind, die genannten Aufnahmebündel (9) auszurichten.

4. Inspektionsvorrichtung (1) nach dem vorangegangenen Anspruch, bei der die genannte optische Gruppe (4) nur eine Kamera (4a) umfasst und bei der die genannten Spiegel in der Lage sind, die genannte Vielzahl der Aufnahmebündel (9) zu bilden.

5. Inspektionsvorrichtung (1) nach einem oder mehreren der vorangegangenen Ansprüche, bei der die genannte optische Gruppe (4) eine Vielzahl von Kameras (4a) umfasst, von denen jede geeignet ist, ein einzelnes Aufnahmebündel (9) zu definieren.

6. Verfahren zur Inspektion mechanischer Elemente (6), die eine Hauptachse (6a) und eine Seitenfläche (6b) umfassen, die ein Schraubengewinde einschließt, wobei das genannte Inspektionsverfahren geeignet ist, wenigstens einen Teil der genannten Seitenfläche (6b) eines mechanischen Elements (6) zu inspizieren, und das eine Phase der Beleuchtung wenigstens eines Teils der genannten Seitenfläche (6b) und eine Phase der Aufnahme der genannten Außenfläche (6b) entlang einer Aufnahmerichtung (9a), die die genannten Seitenfläche (6b) schneidet, umfasst, **dadurch gekennzeichnet, dass** die genannte Beleuchtungsphase die genannte Außenfläche (6b) streifend nach Beleuchtungsrichtungen (3a) beleuchtet, die die Seitenfläche (6b) schneiden und mit der genannten Hauptachse (6a) Beleuchtungswinkel (α) zwischen 5° und 15° bilden und durch die Tatsache, dass die genannte Aufnahmephase wenigstens einen Abschnitt der genannten Seitenfläche (6b) frontal aufnimmt und durch die Tatsache, dass in der genannten Aufnahmephase die Gesamtheit der genannten Seitenfläche (6b) frontal und gleichzeitig nach Aufnahmerichtungen (9a) aufgenommen wird, die die genannte Seitenfläche (6b) schneiden und mit der genannten Hauptachse (6a) Aufnahmewinkel (β) zwischen 75° und 115° bilden und in der genannten Beleuchtungsphase gleichzeitig die Gesamtheit der genannten Außenfläche (6b) beleuchtet wird.

## Revendications

1. Un dispositif d'inspection (1) pour un élément mécanique (6) comprenant un axe principal (6a) et une surface latérale (6b) incluant un filet de vis, ledit dispositif d'inspection (1) étant apte à inspecter au moins une partie de ladite surface latérale (6b) et comprenant une structure de support (2) apte à soutenir lesdits moyens d'éclairage (3) et ledit au moins un groupe optique (4), ledit groupe optique (4) comprenant au moins une caméra (4a) et des moyens d'éclairage (3), **caractérisé en ce que** lesdits moyens d'éclairage (3) sont aptes à éclairer ladite surface latérale (6b) de façon rasante, selon des directions d'éclairage (3a) incidents ladite surface latérale (6b) et formant avec ledit axe principal (6a) des angles d'éclairage (α) compris entre 5° et 15°, et **en ce que** ledit groupe optique (4) est apte à définir au moins un faisceau de prise de vue (9) apte à filmer de front au moins une partie de ladite surface latérale (6b), selon des directions de prise de vue (9a) incidents ladite surface latérale (6b) et formant avec ledit axe principal (6a) des angles de prise de vue (β) compris entre 75° et 115°, et **en ce que** ledit groupe optique (4) est apte à filmer de front et simultanément la totalité de ladite surface latérale (6b) et lesdits moyens d'éclairage (3) sont aptes à éclairer simultanément la totalité de ladite surface extérieure (6b).

2. Dispositif d'inspection (1) selon une ou plusieurs des revendications précédentes, dans lequel ledit groupe optique (4) définit quatre faisceaux de prise de vue (9).

3. Dispositif d'inspection (1) selon une ou plusieurs des revendications précédentes, dans lequel ledit groupe optique (4) comprend des miroirs (5) aptes à orienter lesdits faisceaux de prise de vue (9).

4. Dispositif d'inspection (1) selon la revendication précédente, dans lequel ledit groupe optique (4) comprend une seule caméra (4a) et dans lequel lesdits miroirs sont aptes à créer ladite pluralité de faisceaux de prise de vue (9).

5. Dispositif d'inspection (1) selon une ou plusieurs des revendications précédentes, dans lequel ledit groupe optique (4) comprend une pluralité de caméras (4a) chacune apte à définir un simple faisceau de prise de vue (9).

6. Procédé d'inspection d'éléments mécaniques (6) comprenant un axe principal (6a) et une surface latérale (6b) incluant un filet de vis, ledit procédé d'inspection étant apte à inspecter au moins une partie de ladite surface latérale (6b) d'un élément mécanique (6) et comprenant une phase d'éclairage d'au moins une partie de ladite surface latérale (6b), une phase de prise de vue de ladite surface extérieure (6b) le long d'une direction de prise de vue (9a) incident ladite surface latérale (6b), **caractérisé en ce que** ladite phase d'éclairage éclaire ladite surface extérieure (6b) de façon rasante, selon des directions d'éclairage (3a) incident ladite surface latérale (6b) et formant avec ledit axe principal (6a) des angles d'éclairage (α) compris entre 5° et 15°, et **en ce que** ladite phase de prise de vue filme de front au moins une partie de ladite surface latérale (6b), et **en ce que** ladite phase de prise de vue est filmée de front et simultanément la totalité de ladite surface latérale (6b) selon des directions de prise de vue (9a) incident ladite surface latérale (6b) et formant avec ledit axe principal (6a) des angles de prise de vue (β) compris entre 75° et 115°, et **en ce que** dans ladite phase d'éclairage est éclairée simultanément la totalité de ladite surface extérieure (6b).
